# FASCICULE DE BREVET EUROPEEN

(11) **EP 1 939 457 B1**
(45) Date de publication et mention de la délivrance du brevet: **17.02.2010**
(21) Numéro de dépôt: 07150115.9
(22) Date de dépôt: 19.12.2007
(51) Int. Cl.: F04D 29/04, F16C 19/00

(54) **Pompe avec un dispositif élastique sur un roulement**
Pumpe mit elastischer Vorrichtung auf einem Lager
Pump with an elastic device on a bearing

(30) Priorité: 19.12.2006 FR 0655639
(43) Date de publication de la demande: 02.07.2008
(73) Titulaire: SNECMA, 75015 Paris (FR)
(72) Inventeur: Edeline, Emmanuel, 27630 Ecos (FR); Marciquet, Charles, 27620 Bois Jerome (FR); Fabbri, Laurent, 78250 Meulan (FR); Wahl, Fabien, 27950 Saint Marcel (FR)
(74) Mandataire: Barbin le Bourhis, Joël

(56) Documents cités:
- EP-A1- 0 484 209
- DE-A1- 10 246 694
- FR-A- 2 056 413
- FR-A1- 2 615 253
- JP-A- 57 195 897

## Description

La présente invention concerne le domaine des pompes, en particulier des pompes de gaz liquéfié.

L'invention concerne plus particulièrement une pompe comportant un arbre rotatif, un boîtier de roulement fixe par rapport à l'arbre rotatif, au moins un roulement dont la bague intérieure est liée à l'arbre rotatif, et dont la bague extérieure est apte à coulisser dans le boîtier selon l'axe de rotation sensiblement vertical de l'arbre rotatif.

Dans une pompe placée verticalement dans un réservoir rempli de fluide, et destinée à pomper ce fluide dans lequel elle baigne, un rotor comprend un arbre rotatif entraîné en rotation par un moteur électrique et sur lequel sont fixés des moyens d'entraînement (par exemple un inducteur ou une roue centrifuge) immergés dans le fluide et aptes à faire circuler ce fluide vers le haut le long de l'arbre rotatif. Puis d'autres moyens, par exemple une roue centrifuge, éloignent radialement le fluide de l'arbre rotatif de telle sorte que le fluide circule ensuite vers le haut le long de l'extérieur du moteur verticalement (parallèlement à l'arbre rotatif), et est expulsé à l'autre extrémité de la pompe.

Sur l'arbre rotatif sont montés deux roulements à billes, un roulement inférieur en dessous du moteur, et un roulement supérieur au-dessus du moteur. Ces roulements sont également montés sur des boîtiers de roulement rigidement solidaires de l'enveloppe extérieure de la pompe, et supportent donc l'arbre rotatif dans son mouvement de rotation. Le boîtier de roulement ne tourne pas lorsque l'arbre rotatif tourne. Ainsi, la bague intérieure du roulement inférieur est rigidement fixée sur l'arbre rotatif, et sa bague extérieure est montée dans un alésage du boîtier de roulement de telle sorte que cette bague extérieure est apte à coulisser axialement dans l'alésage du boîtier. Lorsque le moteur et donc le rotor ne tournent pas, la face inférieure de la bague extérieure du roulement inférieur repose sur un épaulement horizontal du boîtier, de telle sorte que cet épaulement horizontal supporte verticalement le poids du rotor, par l'intermédiaire du roulement inférieur.

En fonctionnement normal (rotor en rotation), l'épaulement horizontal supporte en plus la réaction axiale dirigée vers le bas exercée par le fluide sur les moyens d'entraînement de par l'entraînement du fluide vers le haut, et donc sur l'arbre rotatif. Il existe donc une charge axiale sur le roulement inférieur, exercée par l'arbre rotatif et reprise par l'épaulement horizontal (sur la bague extérieure du roulement inférieur). Afin de soulager le roulement inférieur et d'équilibrer axialement le rotor, un mécanisme d'équilibrage axial lié à la roue centrifuge qui est solidaire de l'arbre rotatif, exerce une poussée vers le haut sur l'arbre rotatif, ce qui permet de supprimer l'effort axial auquel le roulement inférieur est soumis.

Si l'arbre rotatif tourne dans le sens inverse de son sens de fonctionnement à cause d'une inversion des phases électriques d'alimentation du moteur (par exemple suite à une erreur de manipulation), les moyens d'entraînement fixés sur l'arbre rotatif et tournant avec lui (par exemple un inducteur ou une roue centrifuge) vont propulser le fluide vers le bas au lieu de l'entraîner vers le haut. La force de réaction du fluide sur ces moyens d'entraînement va donc pousser l'arbre rotatif vers le haut. La roue centrifuge va donc se déplacer vers le haut, et venir frotter sur le boîtier de roulement, ce qui entraîne une usure indésirable de la roue centrifuge et/ou du boîtier (notamment du mécanisme d'équilibrage axial du rotor, qui est décrit en détail plus loin).

On a envisagé de fixer sur le boîtier, au dessus du roulement inférieur, une butée rigide de telle sorte que lors de la remontée de l'arbre rotatif vers le haut causée par une rotation en sens inverse de l'arbre rotatif, la face supérieure de la bague extérieure du roulement inférieur vienne en contact avec cette butée rigide et soit stoppée avant que la roue centrifuge ne vienne en contact frottant sur le boîtier. L'inconvénient de cette solution est qu'en cas de "coup de bélier", c'est-à-dire une brusque surpression dans le fluide causée par un incident hydraulique, le roulement inférieur sera endommagé. En effet, l'arbre rotatif sera alors poussé brutalement vers le haut : la bague extérieure du roulement inférieur, bloquée par la butée rigide, ne se déplacera pas vers le haut, tandis que la bague intérieure du roulement inférieur, solidaire de l'arbre rotatif, sera brusquement déplacée vers le haut avec une force d'amplitude très importante (due à la brusque surpression dans le fluide). Le roulement inférieur sera donc soumis à une charge axiale très importante, et sera endommagé voire détruit, ce qui nécessitera son remplacement.

En outre, il est connu qu'il est bénéfique pour un roulement d'être soumis à une légère précontrainte selon son axe de rotation. En effet, une légère précontrainte axiale entre la bague intérieure et la bague extérieure du roulement permet un contact permanent entre les billes et ces bagues, et évite des impacts répétés en dynamique lorsque le roulement tourne. Une butée rigide fixée sur le boîtier ne permet pas d'exercer sur le roulement inférieur une précontrainte avec suffisamment de précision pour se situer dans la zone optimale où la précontrainte allonge la durée de vie du roulement inférieur.

On connaît également de la demande de brevet FR 2,615,253, considéré comme le document décrivant l'état de la technique le plus proche, une pompe comportant un arbre rotatif, un boîtier de roulement fixe, un roulement dont la bague intérieure est apte à coulisser sur cet arbre rotatif, et dont la bague extérieure est solidaire du boîtier, immobilisée entre l'épaulement du boîtier et un anneau de maintien inséré dans le boîtier, la pompe comportant un dispositif élastique (ressorts hélicoïdaux) qui prend appui sur l'anneau de maintien, de l'autre côté du roulement. Dans un autre mode de réalisation, le dispositif élastique se situe du même côté du roulement que l'épaulement.

La présente invention vise à remédier à ces inconvénients.

L'invention vise à proposer une pompe dans laquelle il n'y a pas de contact frottant entre la roue centrifuge et le boîtier lors du fonctionnement de la pompe en sens inverse, et dans laquelle il n'y a pas d'endommagement du roulement en cas de "coup de bélier".

Ce but est atteint grâce au fait que le boîtier de roulement comporte un épaulement situé d'un côté du roulement et apte à bloquer rigidement en translation selon l'axe de rotation la bague extérieure, et un dispositif élastique déformable fixé sur le boîtier de l'autre côté du roulement, de telle sorte que le roulement se situe entre l'épaulement, et le dispositif élastique.

Avantageusement, en fonctionnement inversé, le dispositif élastique est apte à s'opposer à ce que ladite bague extérieure se déplace selon l'axe de rotation jusqu'au point où une partie d'une pièce liée à l'arbre rotatif frotte sur le boîtier.

Grâce à ces dispositions, en cas de rotation en sens inverse de l'arbre rotatif, le fluide est propulsé vers le bas par les moyens d'entraînement du fluide et provoque par réaction une remontée de l'arbre rotatif vers le haut, et la face supérieure de la bague extérieure du roulement vient ainsi en contact avec le dispositif élastique puis le repousse. Les propriétés de ce dispositif élastique (dimensions, matériau) sont choisies telles que le dispositif élastique résiste suffisamment au déplacement de la bague extérieure pour empêcher celle-ci, et donc l'arbre rotatif, de se déplacer vers le haut jusqu'à un point où la roue centrifuge, qui est liée à l'arbre rotatif et se déplace solidairement avec ce dernier, frotte sur le boîtier.

Dans le cas d'un "coup de bélier", l'arbre rotatif, et donc le roulement, est propulsé brusquement vers le haut, et vient impacter le dispositif élastique avec une force très importante. Le dispositif élastique étant déformable, le roulement n'est donc pas stoppé dans son mouvement par ce dernier, lequel n'exerce donc sur le roulement qu'un effort axial qui n'est pas susceptible de l'endommager. Le "coup de bélier" est amorti uniquement par contact entre la roue centrifuge et le boîtier, et ce contact est suffisamment bref pour ne pas endommager ces pièces par frottement.

Avantageusement, le dispositif élastique comprend un premier élément élastique de raideur k1, et un deuxième élément élastique de raideur k2 supérieure à k1 disposé au-dessus du premier élément élastique et n'exerçant pas d'effort sur ladite bague extérieure tant que la distance entre celle-ci et l'épaulement reste inférieure à une certaine valeur.

Avantageusement, en fonctionnement normal de la pompe, le premier élément élastique de raideur k1 est apte à exercer sur la bague extérieure une force qui allonge la durée de vie du roulement.

Ainsi, le fait que le dispositif élastique comprenne un premier élément élastique et un deuxième élément élastique de raideurs distinctes permet à ce dispositif d'exercer sur la bague extérieure du roulement à la fois une précontrainte qui allonge la durée de vie du roulement lors du fonctionnement normal de la pompe, et une force qui s'oppose à un déplacement vers le haut trop important de l'arbre rotatif qui occasionnerait un contact indésirable entre la face supérieure de la roue centrifuge et la face inférieure du boîtier lors du fonctionnement en sens inverse de la pompe. En fonctionnement normal, le premier élément élastique exerce en permanence sur la bague extérieure du roulement une légère contrainte qui se situe dans la plage de contraintes où la durée de vie du roulement est augmentée. Cette contrainte est insuffisante pour résister au déplacement vers le haut du roulement et de l'arbre rotatif en cas de rotation en sens inverse du moteur. Le premier élément élastique est donc déformé vers le haut par la bague extérieure du roulement jusqu'au second élément élastique. Ce second élément élastique possède une raideur k2 supérieure à k1 et suffisamment élevée pour exercer sur la bague extérieure du roulement une force qui empêche le roulement et l'arbre rotatif de se déplacer trop vers le haut jusqu'à ce qu'il y ait un contact entre la face supérieure de la roue centrifuge et la face inférieure du boîtier.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en coupe longitudinale d'une pompe selon l'invention,
- la figure 2 est une vue de la zone 2 de la figure 1,
- la figure 3 est une vue correspondant à la zone 2 de la figure 1, illustrant un autre mode de réalisation d'une pompe selon l'invention.

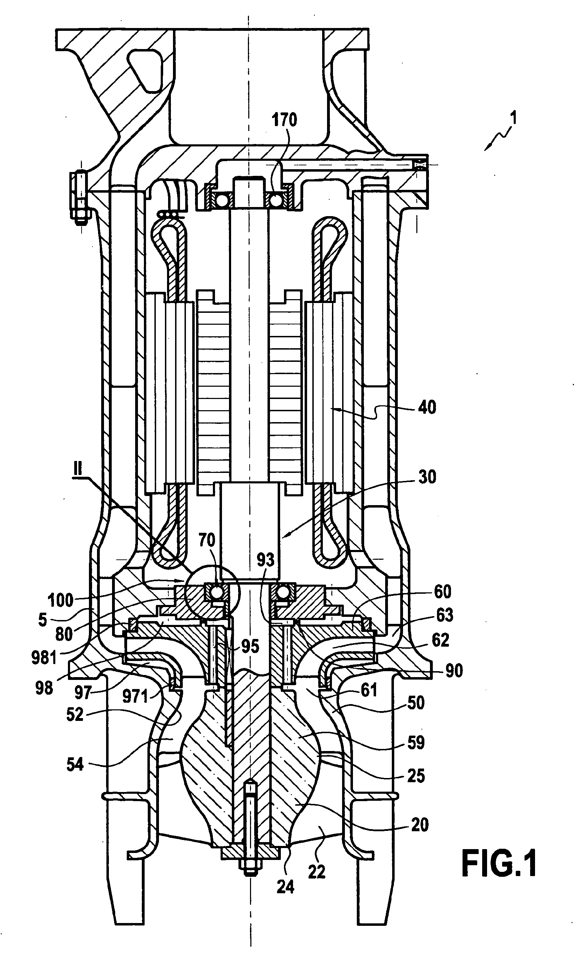

Dans une pompe 1 placée dans un réservoir rempli de fluide, et destinée à pomper ce fluide dans lequel elle baigne, un arbre rotatif 30, entraîné par un moteur électrique 40, entraîne en rotation un inducteur 20 qui fait circuler le fluide dans une direction parallèle à l'arbre rotatif 30. Une telle pompe 1 est représentée sur la figure 1. Le fluide est par exemple du gaz naturel liquéfié, et le réservoir est une cuve sur un navire cargo ou à quai. L'inducteur 20, qui est fixé sur l'arbre rotatif 30, a sensiblement la forme d'un cône portant sur sa surface extérieure des aubes 22. L'inducteur 20 tourne sur lui-même autour de l'axe de l'arbre rotatif 30 de telle sorte que les aubes 22 poussent le fluide dans lequel elles baignent de la pointe 24 du cône vers sa partie de diamètre le plus large 25. Le fluide continue ensuite sa progression le long du moteur 40 dans un conduit annulaire à l'extérieur de la cavité où est logé le moteur électrique, qui est situé au dessus de l'inducteur 20. Entre l'inducteur 20 et le moteur 40, la pompe peut comporter un redresseur 54, et comporte une roue centrifuge 60. Dans ce cas, le cône de l'inducteur se prolonge continûment par un élément 59 dont l'axe de symétrie est l'axe de l'arbre rotatif et dont le diamètre diminue depuis la partie de diamètre le plus large 25 du cône. Cet élément 59 est entouré par la partie 50 du carter portant le redresseur 54, qui est centrée sur l'axe de rotation de l'arbre rotatif 30 et est fixe par rapport à ce dernier, et qui entoure une région centrale dont le diamètre diminue avec celui de l'élément 59, de telle sorte que la distance entre la surface extérieure de l'élément 59 et la paroi interne 52 de la partie 50 du carter sur laquelle est fixé le redresseur 54 entourant la région centrale est sensiblement constante. Le fluide circulant dans la région centrale est ainsi entraîné plus près de l'arbre rotatif 30. Le redresseur 54 comprend des aubes disposées de telle sorte que le fluide, animé d'un mouvement essentiellement circonférentiel en entrée du redresseur 54, est animé d'un mouvement essentiellement axial en sortie du redresseur 54. Au-dessus du redresseur 54, la roue centrifuge 60, entraînée par l'arbre rotatif 30 sur lequel elle est fixée, comporte des canaux 62 qui éloignent radialement le fluide de l'arbre rotatif 30 de telle sorte que le fluide circule ensuite le long de l'extérieur du moteur 40 dans une direction axiale (parallèlement à l'arbre rotatif 30) vers le haut.

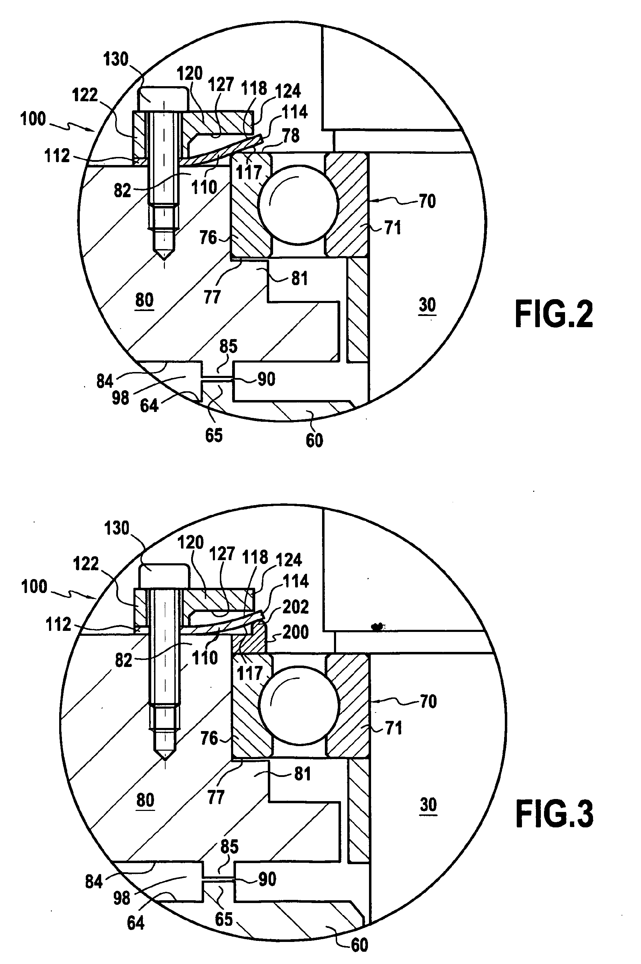

Sur l'arbre rotatif 30 sont montés deux roulements à billes, un roulement inférieur 70 en dessous du moteur 40, et un roulement supérieur 170 au-dessus du moteur 40. Comme représenté sur la figure 2, la bague intérieure 71 du roulement inférieur 70 est fixée rigidement sur l'arbre rotatif 30, et la bague extérieure 76 est logée dans un boîtier 80 de roulement (ce boîtier 80 ne tourne pas lorsque l'arbre rotatif 30 tourne) de telle sorte que cette bague extérieure 76 est apte à coulisser axialement et à tourner par rapport au boîtier 80. Le boîtier 80 est lui-même solidaire de l'enveloppe extérieure 5 de la pompe 1. La bague extérieure 76 du roulement inférieur 70 est donc mobile en translation dans l'alésage du boîtier 80 dans lequel elle est montée. Dans le réservoir qu'elle doit vider, la pompe 1 (et donc l'arbre rotatif 30) est verticale, et entraîne le fluide du bas vers le haut. Lorsque le moteur 40 et donc l'arbre rotatif 30 ne tournent pas, la face inférieure 77 de la bague extérieure 76 du roulement inférieur 70 repose sur un épaulement horizontal 81 du boîtier 80, de telle sorte que cet épaulement horizontal 81 supporte verticalement le poids de l'arbre rotatif 30, par l'intermédiaire du roulement inférieur 70.

En fonctionnement normal (arbre rotatif en rotation), l'épaulement horizontal 81 supporte en plus la réaction axiale dirigée vers le bas exercée par le fluide sur l'inducteur 20, résultant de l'entraînement du fluide vers le haut par l'inducteur 20. Il existe donc une charge axiale sur le roulement inférieur 70, exercée par l'arbre rotatif 30 et reprise par l'épaulement horizontal 81 (sur la bague extérieure 76 du roulement inférieur 70). Afin de soulager le roulement inférieur 70 et d'équilibrer axialement l'arbre rotatif 30, un mécanisme d'équilibrage axial (décrit ci-dessous) lié à la roue centrifuge 60 qui est solidaire de l'arbre rotatif 30, exerce une poussée vers le haut sur l'arbre rotatif 30, ce qui permet de compenser l'effort axial auquel le roulement inférieur 70 est soumis. Le déplacement de l'arbre rotatif 30 résultant de cette poussée est calibré pour maintenir un espace entre une nervure 85 du boîtier 80 située sur la face inférieure 84 du boîtier 80, et une nervure de roue 65 située sur la face supérieure 64 de la roue centrifuge 60, ces deux nervures définissant un passage annulaire 90, de telle sorte qu'il n'y a pas frottement entre ces deux nervures.

Le mécanisme d'équilibrage axial est dynamique et fonctionne par asservissement fluidique, et son principe est décrit ci-après. En se référant à la figure 1, on note que deux dérivations du fluide sont prises en sortie des canaux 62 de la roue centrifuge 60. La première dérivation fait aboutir le fluide dans une première chambre 97 annulaire sensiblement horizontale située sous la roue centrifuge 60, plus précisément entre la roue centrifuge 60 et l'enveloppe extérieure 5. La seconde dérivation fait aboutir le fluide dans une seconde chambre 98 annulaire sensiblement horizontale située au dessus de la roue centrifuge 60, plus précisément entre la roue centrifuge 60 et le boîtier 80. Le fluide pénètre librement dans la première chambre 97 par son extrémité radialement extérieure. A l'autre extrémité de la première chambre 97, c'est-à-dire son extrémité radialement intérieure, se trouve un premier joint labyrinthe 971 qui diminue le débit de fluide sortant de la première chambre 97 vers l'entrée 61 des canaux 62. En conséquence, la pression dans la chambre 97 est sensiblement égale à la pression à la sortie 63 des canaux 62, c'est-à-dire une haute pression. Entre les canaux 62 et la seconde chambre 98, c'est-à-dire à l'extrémité radialement extérieure de celle-ci, se trouve un second joint labyrinthe 981, de telle sorte que le débit de fluide entrant dans la seconde chambre 98 est faible. A l'extrémité radialement intérieure de la seconde chambre 98 se trouve le passage annulaire 90, qui est défini par la nervure 85 du boîtier 80, et la nervure de roue 65, qui sont annulaires, coaxiales, et en regard l'une de l'autre. Un espace annulaire de décharge 93 s'étend radialement entre le passage annulaire 90 et l'arbre rotatif 30. Il communique avec l'entrée 61 des canaux 62, qui est à basse pression, par des canaux de réinjection 95 pratiqués dans la roue 60. Ainsi, l'espace annulaire de décharge 93 se trouve en permanence pratiquement à la basse pression qui règne à l'entrée 61 de la roue centrifuge 60. Par conséquent, la pression de fluide dans la seconde chambre 98 est à basse pression, et est inférieure à la pression de fluide dans la première chambre 97. Ce différentiel de pression entre la première chambre 97 et la seconde chambre 98 créé une poussée vers le haut qui s'exerce sur la roue centrifuge 60. La roue centrifuge 60 et l'arbre rotatif 30 sont donc poussés vers le haut, ce qui permet de compenser l'effort axial auquel le roulement inférieur 70 est soumis. Dans le même temps, du fait que la roue centrifuge 60 se rapproche du boîtier 80, la distance entre la nervure 85 du boîtier 80 et la nervure de roue 65 diminue, et donc l'espace du passage annulaire 90 entre la nervure 85 et la nervure de roue 65 se réduit. Etant donné que le fluide ne peut s'écouler hors de la seconde chambre 98 que par l'espace du passage annulaire 90, le débit de sortie du fluide de la seconde chambre 98 est réduit lorsque cet espace est réduit. La pression dans la seconde chambre 98 augmente donc, ce qui diminue le différentiel de pression entre la première chambre 97 et la seconde chambre 98, et diminue donc la poussée qui s'exerce sur la roue centrifuge 60. En conséquence la roue centrifuge 60 redescend, ce qui augmente l'espace du passage annulaire 90, ce qui augmente le différentiel de pression entre la première chambre 97 et la seconde chambre 98, et déplace donc la roue centrifuge 60 vers le haut. On comprend bien comment ce mécanisme d'asservissement fluidique décrit ci-dessus permet de maintenir un espace du passage annulaire 90 sensiblement constant entre la nervure 85 et la nervure de roue 65. En d'autres termes, la nervure de roue 65 et la nervure 85 située sur une face du boîtier 80 définissent un passage annulaire 90 qui permet un équilibrage axial de l'arbre rotatif 30.

Si l'arbre rotatif 30 tourne dans le sens inverse de son sens de fonctionnement normal à cause d'une inversion des phases électriques d'alimentation du moteur 40 (par exemple suite à une erreur de manipulation), l'inducteur 20 va propulser le fluide vers le bas au lieu de l'entraîner vers le haut. La force de réaction du fluide sur l'inducteur 20 va donc pousser l'arbre rotatif 30 vers le haut. La nervure de roue 65 va donc venir frotter sur la nervure 85 du boîtier 80, ce qui entraîne une usure indésirable de la roue centrifuge 60 et/ou du boîtier 80 (et de plus, l'absence d'espace entre les nervures invalide l'équilibrage axial de l'arbre rotatif 30).

Pour éviter ce frottement indésirable, la pompe 1 comporte un dispositif élastique 100, qui est illustré en détail sur la figure 2. Le boîtier 80 comporte sur un second épaulement horizontal 82 un premier élément élastique 110 et un second élément élastique 120. Le dispositif élastique 100 comprend donc le premier élément élastique 110 et le second élément élastique 120. Dans l'exemple décrit, le premier et le deuxième éléments élastiques 110, 120 sont des rondelles annulaires. L'extrémité extérieure 122 du second élément élastique 120 est située en contact et au-dessus de l'extrémité extérieure 112 du premier élément élastique 110, et ces deux extrémités extérieures sont fixées sur ce second épaulement 82 par des vis 130. Ces extrémités extérieures pourraient être fixées par un autre moyen, par exemple serrés entre le second épaulement 82 et une pièce rigide fixée rigidement sur le boîtier 80. L'extrémité intérieure 124 du second élément élastique 120 et l'extrémité intérieure 114 du premier élément élastique 110 sont libres de se déformer en flexion sous l'effet d'une force verticale (c'est-à-dire une force dans la direction de l'axe de rotation de l'arbre rotatif 30). Le premier épaulement 81 et le second épaulement 82 du boîtier sont espacés verticalement de telle sorte qu'en fonctionnement normal, le mécanisme d'équilibrage axial maintient le roulement inférieur 70 à une hauteur telle que la face supérieure 78 de la bague extérieure 76 du roulement inférieur 70 est en contact et exerce une force sur la face inférieure 117 de l'extrémité intérieure 114 du premier élément élastique 110, la face inférieure 77 du roulement inférieur 70 étant en contact avec l'épaulement 81 ou légèrement espacé de ce dernier en fonction des fluctuations en hauteur de l'arbre rotatif 30 causées par le mécanisme d'équilibrage axial. L'extrémité intérieure 114 du premier élément élastique 110 est donc repoussée vers le haut par la face supérieure 78 de la bague extérieure 76 du roulement inférieur 70. Le premier élément élastique 110 (conjointement avec l'arbre rotatif 30) exerce donc une force axiale C sur le roulement inférieur 70 dans le sens de son axe de rotation, et les dimensions et propriétés mécaniques du premier élément élastique 110 sont calculées de telle sorte que la force C se situe dans la zone optimale de précontrainte du roulement inférieur 70. Ainsi, la durée de vie du roulement inférieur 70 est augmentée, ce qui est bénéfique.

L'extrémité intérieure 124 du deuxième élément élastique 120 est suffisamment espacée verticalement de l'extrémité intérieure 114 du premier élément élastique de telle sorte que la face inférieure 127 de l'extrémité intérieure 124 du deuxième élément élastique 120 n'est pas en contact avec la face supérieure 118 de l'extrémité intérieure 114 du premier élément élastique 110 en fonctionnement normal de la pompe. Il existe donc un jeu fonctionnel entre le premier élément élastique 110 et le deuxième élément élastique 120. Ainsi, en fonctionnement normal de la pompe, le deuxième élément élastique 120 n'exerce pas de contrainte sur le roulement amont 70.

En cas de rotation du moteur 40 en sens inverse de son sens de rotation lors du fonctionnement normal de la pompe, l'arbre rotatif 30 est poussé vers le haut, et entraîne avec lui le roulement 70. La face supérieure 78 de la bague extérieure 76 du roulement inférieur 70 exerce alors une force maximale F. Cette force F est suffisamment élevée pour fléchir vers le haut l'extrémité intérieure 114 du premier élément élastique 110 jusqu'à ce que cette extrémité entre en contact et pousse vers le haut l'extrémité intérieure 124 du deuxième élément élastique 120. Les dimensions et propriétés mécaniques du deuxième élément élastique 120 sont choisies de telle sorte que la force maximale que le premier et le deuxième éléments élastiques 110, 120 peuvent exercer sur le roulement inférieur 70 pour s'opposer à son déplacement vers le haut est supérieure à la force F. Ainsi, le déplacement vers le haut du roulement inférieur 70 est stoppé par le premier et le deuxième éléments élastiques 110, 120 de telle sorte que la nervure 85 de la face inférieure 84 du boîtier 80 ne touche pas la nervure de roue 65, et qu'il y a un espace entre la nervure 85 de la face inférieure 84 du boîtier 80 et la nervure de roue 65.

Dans le cas d'un "coup de bélier", l'arbre rotatif 30, et donc le roulement 70, est propulsé brusquement vers le haut, et vient impacter le dispositif élastique 100. Etant déformables, le premier et le deuxième éléments élastiques 110, 120 fléchissent alors sans exercer sur le roulement inférieur 70 d'effort de cisaillement susceptible de l'endommager. Le "coup de bélier" est amorti uniquement par contact bref entre la nervure de roue 65 et la nervure 85 du boîtier 80.

Selon un autre mode de réalisation de l'invention, le premier épaulement 81 et le second épaulement 82 du boîtier sont espacés verticalement d'une distance supérieure à l'épaisseur du roulement inférieur 70 de telle sorte qu'un poussoir rigide 200 peut se loger entre la face supérieure 78 de la bague extérieure 76 du roulement amont 70 et la face inférieure 117 de l'extrémité intérieure 114 du premier élément élastique 110, comme représenté sur la figure 3. Ainsi, la face inférieure du poussoir 200 repose sur la face supérieure 78 de la bague extérieure 76 du roulement amont 70. Le poussoir 200 possède en son extrémité intérieure une protubérance verticale 202. En fonctionnement normal, le mécanisme d'équilibrage axial maintient le roulement inférieur 70 à une hauteur telle que la protubérance verticale 202 est en contact et exerce une force sur la face inférieure 117 de l'extrémité intérieure 114 du premier élément élastique 110. L'extrémité intérieure 114 du premier élément élastique 110 est donc repoussée vers le haut par la protubérance verticale 202. Le premier élément élastique 110 exerce donc, par l'intermédiaire du poussoir 200, une force C' sur le roulement inférieur 70 dans le sens de son axe de rotation, et les dimensions et propriétés mécaniques du premier élément élastique 110 et les dimensions du poussoir 200 et de la protubérance 202 sont calculés de telle sorte que la force C' se situe dans la zone optimale de précontrainte du roulement inférieur 70. Ainsi, la durée de vie du roulement inférieur 70 est augmentée, ce qui est bénéfique.

## Revendications

1. Pompe (1) comportant un arbre rotatif (30), un boîtier (80) de roulement, au moins un roulement (70), et un dispositif élastique (100) déformable, ledit boîtier (80) de roulement comportant un épaulement (81) situé d'un côté dudit roulement et formant butée axiale pour la bague extérieure (76) dudit roulement, **caractérisé en ce que** la bague intérieure (71) dudit roulement est solidaire dudit arbre rotatif et la bague extérieure (76) est apte à coulisser dans ledit boîtier selon l'axe de rotation dudit arbre rotatif, ledit dispositif élastique (100) déformable étant fixé sur ledit boîtier de l'autre côté dudit roulement (70), de telle sorte que ledit roulement se situe entre ledit épaulement et ledit dispositif élastique, ce dispositif élastique exerçant une force sur ladite bague extérieure.

2. Pompe (1) selon la revendication 1, **caractérisée en ce que,** en fonctionnement inversé, ledit dispositif élastique (100) est apte à s'opposer à ce que ladite bague extérieure (76) se déplace selon l'axe de rotation jusqu'au point où une partie d'une pièce liée audit arbre rotatif (30) frotte sur ledit boîtier (80).

3. Pompe (1) selon la revendication 1 ou 2, **caractérisée en ce que** ledit dispositif élastique (100) comprend un premier élément élastique (110) de raideur k1, et un deuxième élément élastique (120) de raideur k2 supérieure à k1, disposé par rapport audit premier élément élastique de telle sorte que le premier élément élastique se situe entre ledit roulement (70) et le deuxième élément élastique, ce deuxième élément élastique n'exerçant pas d'effort sur ladite bague extérieure (76) tant que la distance entre celle-ci et ledit épaulement (81) reste inférieure à une certaine valeur.

4. Pompe (1) selon la revendication 3, **caractérisée en ce qu'**en fonctionnement normal de celle-ci ledit premier élément élastique (110) de raideur k1 est apte à exercer sur ladite bague extérieure (76) une force qui allonge la durée de vie dudit roulement (70).

5. Pompe (1) selon l'une des revendications 2 à 4, **caractérisée en ce qu'**il existe un jeu fonctionnel entre le premier élément élastique (110) et le deuxième élément élastique (120).

6. Pompe selon l'une des revendications 2 à 5, **caractérisée en ce que** ladite pièce liée audit arbre rotatif (30) est une roue centrifuge (60), la partie de ladite pièce liée audit arbre rotatif est une nervure de roue (65) située sur une face (64) de ladite roue centrifuge, et ladite partie du boîtier (80) est une nervure (85) située sur une face (84) dudit boîtier.

7. Pompe (1) selon la revendication 6, **caractérisée en ce que** ladite nervure de roue (65) et ladite nervure (85) située sur une face (84) dudit boîtier (80) définissent un passage annulaire (90) qui permet un équilibrage axial dudit arbre rotatif (30).

8. Pompe (1) selon l'une des revendications 3 à 7, **caractérisée en ce que** le premier (110) et le deuxième (120) éléments élastiques sont des rondelles annulaires fixées sur leurs extrémités extérieures (112, 122) audit boîtier (80) par des moyens de fixation, les extrémités intérieures (114, 124) desdites rondelles étant libres de se déformer en flexion dans la direction de l'axe de rotation dudit arbre rotatif (30).

9. Pompe (1) selon l'une des revendications 3 à 8, **caractérisée en ce qu'**un poussoir (200) est situé entre le premier élément élastique (110) et la bague extérieure (76) dudit roulement (70), ledit premier élément élastique (110) de raideur k1 étant apte à plaquer ledit poussoir contre ladite bague extérieure de telle sorte qu'en fonctionnement normal de la pompe le poussoir (200) est apte à exercer sur ladite bague extérieure une force qui allonge la durée de vie dudit roulement (70).

## Claims

1. Pump (1) comprising a rotary shaft (30), a bearing housing (80), at least one rolling bearing (70), and a deformable elastic device (100), said bearing housing (80) comprising a shoulder (81) situated on one side of the said bearing and forming an axial abutment for said outer ring (76) of said rolling bearing, the pump being **characterized in that** the inner ring (71) of said rolling bearing is connected to said rotary shaft and the outer ring (76) is able to slide in said housing along the axis of rotation of said rotary shaft, said deformable elastic device (100) being fixed to said housing on the other side of said bearing (70) so that said bearing lies between said shoulder and said elastic device, with said elastic device exerting a force on said outer ring.

2. Pump (1) according to Claim 1, **characterized in that,** when running in reverse, said elastic device (100) is able to prevent said outer ring (76) from moving along the axis of rotation to such an extent that part of a component attached to said rotary shaft (30) rubs against said housing (80).

3. Pump (1) according to Claim 1 or 2, **characterized in that** said elastic device (100) comprises a first elastic element (110) of stiffness k1, and a second elastic element (120) of stiffness k2 greater than k1, positioned with respect to said first elastic element in such a way that the first elastic element lies between said bearing (70) and the second elastic element, this second elastic element exerting no force on said outer ring (76) as long as the distance between the latter and said shoulder (81) remains below a certain value.

4. Pump (1) according to Claim 3, **characterized in that** in normal operation thereof, said first elastic element (110) of stiffness k1 is designed to exert on said outer ring (76) a force that extends the life of said bearing (70).

5. Pump (1) according to one of Claims 2 to 4, **characterized in that** there is a functional clearance between the first elastic element (110) and the second elastic element (120).

6. Pump according to one of Claims 2 to 5, **characterized in that** said component connected to said rotary shaft (30) is a centrifugal impeller (60), the part of said component connected to said rotary shaft is an impeller rib (65) situated on one face (64) of said centrifugal impeller, and said part of the housing (80) is a rib (85) situated on one face (84) of said housing.

7. Pump (1) according to Claim 6, **characterized in that** said impeller rib (65) and said rib (85) situated on one face (84) of said housing (80) together define an annular passage (90) used for axially balancing said rotary shaft (30).

8. Pump (1) according to one of Claims 3 to 7, **characterized in that** the first (110) and second (120) elastic elements are annular washers fixed at their outer ends (112, 122) to said housing (80) by fasteners, the inner ends (114, 124) of said washers being free to deform in bending in the direction of the axis of rotation of said rotary shaft (30).

9. Pump (1) according to one of Claims 3 to 8, **characterized in that** a pusher (200) is situated between the first elastic element (110) and the outer ring (76) of said rolling bearing (70), said first elastic element (110) of stiffness k1 being able to press said pusher firmly against said outer ring in such a way that when the pump is running normally, the pusher (200) is able to exert on said outer ring a force which extends the life of said bearing (70).

## Patentansprüche

1. Pumpe (1) umfassend eine umlaufende Welle (30), ein Wälzlagergehäuse (80), wenigstens ein Wälzlager (70) sowie eine verformbare elastische Vorrichtung (100), wobei das Wälzlagergehäuse (80) eine Schulter (81) aufweist, die sich auf einer Seite des Wälzlagers befindet und einen axialen Anschlag für den Außenring (76) des Wälzlagers bildet, **dadurch gekennzeichnet, daß** der Innenring (71) des Wälzlagers mit der umlaufenden Welle fest verbunden ist und der Außenring (76) geeignet ist, in dem Gehäuse entlang der Drehachse der umlaufenden Welle zu gleiten, wobei die verformbare elastische Vorrichtung (100) an dem Gehäuse auf der anderen Seite des Wälzlagers (70) befestigt ist, so daß das Wälzlager sich zwischen der Schulter und der elastischen Vorrichtung befindet, wobei diese elastische Vorrichtung eine Kraft auf den Außenring ausübt.

2. Pumpe (1) nach Anspruch 1, **dadurch gekennzeichnet, daß** im inversen Betrieb die elastische Vorrichtung (100) geeignet ist, der Tatsache entgegenzuwirken, daß sich der Außenring (76) entlang der Drehachse bis zu der Stelle bewegt, an der ein Stück eines mit der umlaufenden Welle (30) verbundenen Teils an dem Gehäuse (80) schleift.

3. Pumpe (1) nach Anspruch 1 oder 2, **dadurch gekennzeichnet, daß** die elastische Vorrichtung (100) ein erstes elastisches Element (110) mit der Steifigkeit k1 und ein zweites elastisches Element (120) mit der Steifigkeit k2 größer k1 umfaßt, das in bezug auf das erste elastische Element derart angeordnet ist, daß sich das erste elastische Element zwischen dem Wälzlager (70) und dem zweiten elastischen Element befindet, wobei dieses zweite elastische Element solange keine Kraft auf den Außenring (76) ausübt, wie der Abstand zwischen diesem und der Schulter (81) kleiner als ein bestimmter Wert bleibt.

4. Pumpe (1) nach Anspruch 3, **dadurch gekennzeichnet, daß** im Normalbetrieb dieser Pumpe das erste elastische Element (110) mit der Steifigkeit k1 geeignet ist, auf den Außenring (76) eine Kraft auszuüben, welche die Lebensdauer des Wälzlagers (70) verlängert.

5. Pumpe (1) nach einem der Ansprüche 2 bis 4, **dadurch gekennzeichnet, daß** zwischen dem ersten elastischen Element (110) und dem zweiten elastischen Element (120) ein Betriebsspiel vorhanden ist.

6. Pumpe nach einem der Ansprüche 2 bis 5, **dadurch gekennzeichnet, daß** das mit der umlaufenden Welle (30) verbundene Teil ein Zentrifugalrad (60) ist, das Stück des mit der umlaufenden Welle verbundenen Teils ein an einer Fläche (64) des Zentrifugalrades befindlicher Radsteg (65) ist und das Teil des Gehäuses (80) ein an einer Fläche (84) des Gehäuses befindlicher Steg (85) ist.

7. Pumpe (1) nach Anspruch 6, **dadurch gekennzeichnet, daß** der Radsteg (65) und der an einer Fläche (84) des Gehäuses (80) befindliche Steg (85) einen ringförmigen Durchgang (90) definieren, der einen axialen Ausgleich der umlaufenden Welle (30) ermöglicht.

8. Pumpe (1) nach einem der Ansprüche 3 bis 7, **dadurch gekennzeichnet, daß** das erste elastische Element (110) und das zweite elastische Element (120) ringförmige Scheiben sind, die an ihren äußeren Enden (112, 122) durch Befestigungsmittel an dem Gehäuse (80) befestigt sind, wobei die inneren Enden (114, 124) der Scheiben in der Richtung der Drehachse der umlaufenden Welle (30) biegeverformbar sind.

9. Pumpe (1) nach einem der Ansprüche 3 bis 8, **dadurch gekennzeichnet, daß** sich zwischen dem ersten elastischen Element (110) und dem Außenring (76) des Wälzlagers (70) ein Stößel (200) befindet, wobei das erste elastische Element (110) mit der Steifigkeit k1 geeignet ist, den Stößel gegen den Außenring zu drücken, so daß im Normalbetrieb der Pumpe der Stößel (200) geeignet ist, auf den Außenring eine Kraft auszuüben, welche die Lebensdauer des Wälzlagers (70) verlängert.
